# EUROPÄISCHE PATENTSCHRIFT

(11) **EP 1 813 457 B1**
(45) Veröffentlichungstag und Bekanntmachung des Hinweises auf die Patenterteilung: **08.04.2009**
(21) Anmeldenummer: 07000571.5
(22) Anmeldetag: 12.01.2007
(51) Int. Cl.: B60J 7/14

(54) **Dachkinematik für ein zu öffnendes Fahrzeugdach**
Roof frame for the roof of a convertible vehicle.
Cinématique de toit pour un toit de véhicule cabriolet

(30) Priorität: 28.01.2006 DE 102006004108
(43) Veröffentlichungstag der Anmeldung: 01.08.2007
(73) Patentinhaber: Wilhelm Karmann GmbH, 49084 Osnabrück (DE)
(72) Erfinder: Plassmeyer, Jörg, 49196 Bad Laer (DE); Schramm, Holger, 49143 Bissendorf (DE)

(56) Entgegenhaltungen:
- WO-A-20/05016677
- DE-B4- 10 161 394
- FR-A1- 2 851 744
- FR-A1- 2 859 413
- US-A1- 2005 144 939
- US-A1- 2005 264 025

## Beschreibung

Die Erfindung betrifft ein zu öffnendes Fahrzeugdach, insbesondere ein Faltdach bzw. ein Hardtopfahrzeugdach, mit mindestens zwei Dachteilen. Das Fahrzeugdach ist zwischen einer offenen Position, in der das Fahrzeug als Cabrioletfahrzeug betrieben werden kann, und einer geschlossenen Position, in der das Fahrzeug eine geschlossene Fahrgastzelle aufweist, bewegbar.

Derartige Fahrzeugdächer werden mit Dachkinematiken betrieben, bei denen die einzelnen Abschnitte des Fahrzeugdachs, die relativ zueinander beweglich und meist aufeinander ablegbar sind, mittels Gestängen und Lenkern verbunden sind, die die Verdeckkinematik bilden. Wird ein Hebel oder Lenker des Gestänges bewegt, so bewegt sich das Verdeck insgesamt auf einer vorgegebenen Bahn aufgrund der Zwangskopplung der Gestängeteile. Zur Bewegung der Verdeckkinematik sind elektrische oder hydraulische Antriebseinheiten vorgesehen. Diese Antriebseinheiten sind gewöhnlich an einem heckseitigen Hauptlager, an dem das Fahrzeugdach mit der Fahrzeugkarosserie gekoppelt ist, angebunden und wirken direkt oder über weitere Hebel auf das Verdeckgestänge. Um beidseitig am Fahrzeug eine synchrone Öffnungs- und Schließbewegung vorzusehen, greifen die Antriebseinheiten sowohl links als auch rechts in den Gestängeparallelogrammen der Dachteile an.

Aus der DE 101 61 394 B4 ist eine Dachkinematik bekannt, bei welcher ein Aktuator für das Fahrzeugdach in einem mittleren von drei hintereinander liegenden Dachteilen vorgesehen ist. Die Stellkinematik in diesem mittleren Hardtopfahrzeugdach wirkt zwischen zwei angrenzenden Dachteilen zu deren Festlegung.

Davon ausgehend ist es Aufgabe der Erfindung, eine Dachkinematik für ein Cabrioletverdeck vorzusehen, mit welcher ein Cabrioletverdeck stabilisiert werden kann und einfach bedienbar ist.

Diese Aufgabe wird mit einer Dachkinematik mit den Merkmalen des Anspruchs 1 gelöst. Bevorzugte Ausführungsformen sind in den abhängigen Ansprüchen angegeben.

Erfindungsgemäß enthält eine Dachkinematik für ein zu öffnendes Fahrzeugdach mindestens zwei miteinander und in einem heckseitigen Bereich der Dachkinematik mit der Fahrzeugkarosserie zwangsverbundene Dachteile, von denen das vordere eine Dachspitze ist. Der Antrieb für die Dachkinematik zum Überführen der Dachkinematik zwischen der geöffneten und der geschlossenen Position ist an der Dachspitze, d.h. dem vordersten Dachteil, vorgesehen. Dies bietet die Möglichkeit, dass das Hauptlager des Verdecks, an dem das Dach an der Karosserie angelenkt ist, einfacher und weniger Bauraum beanspruchend ausgeführt werden kann, da dort kein Antrieb vorgesehen werden muss. Außerdem kann die Anzahl von Lenkern und Hebeln verringert werden, da am vorderen Drehpunkt, also dem Drehpunkt zwischen der Dachspitze und dem daran nach hinten angrenzenden weiteren Dachteil, kein zusätzliches Gestänge in Form eines Parallelogramms erforderlich ist. Auch ist zur Bewegung dieser Teile kein zusätzlicher Antrieb erforderlich. Vielmehr kann sowohl als Hauptantrieb als auch als Antrieb zum Ablegen und Relativbewegen dieser Dachteile der Antrieb in der Dachspitze oder an der Dachspitze verwendet werden.

Der Erfindung liegt somit der Gedanke zugrunde, den bisher heckseitig an der Dachkinematik angebrachten Antrieb an oder in den vorderen Teil des Daches zu verlegen. Dabei kann der Antrieb sowohl seitlich an den Dachrahmenteilen als auch mittig zwischen dem linksseitigen und dem rechtsseitigen Dachrahmenteil vorgesehen sein. Bei einem seitlichen Vorsehen am linken und rechten Dachrahmenteil ist vorzugsweise der Antrieb in einen linken und rechten Antrieb aufgeteilt, um Antriebskräfte gleichmäßig einzuleiten.

Nach einer bevorzugten Ausführungsform ist der Antrieb ein elektrischer oder hydraulischer Antrieb. Mit Hilfe dieser Antriebe, die verhältnismäßig klein gestaltet werden können, können die Gestängeteile der Dachkinematik zuverlässig bewegt werden.

Nach einer bevorzugten Ausführungsform liegt der Angriffspunkt für den Antrieb für die Dachkinematik an einem Drehpunkt zwischen der Dachspitze und einer vorderen Führungsstange, die vorzugsweise ein Element ist, das zum Herstellen der Zwangsverbindung zu dem mindestens einen weiteren Dachteil und damit dem Führen der Dachteile auf einer vorgegebenen Bewegungsbahn beim Öffnen bzw. Schließen des Fahrzeugdaches dient. Alternativ greift der Antrieb an einem Drehpunkt zwischen der Dachspitze und einem heckseitig daran angrenzenden Dachrahmenteil, z. B. bei drei Dachteilen dem mittleren Dachteil oder bei zwei Dachteilen dem heckseitigen Dachteil, an. In allen Fällen kann die die Öffnung- bzw. Schließkinematik auslösende Bewegung gut in das Dachgestänge eingeleitet werden.

Beispielsweise kann bei einem Hydraulikzylinder als Antrieb dieser bzw. dessen Hubkolben mit zwei Führungshebeln verbunden sein, die an ihrem anderen Ende an der Dachspitze bzw. der vorderen Führungsstange angelenkt sind und somit die Drehbewegung in den Drehpunkt zwischen Dachspitze und vorderer Führungsstange einleiten. Alternativ sind die freien Enden der Führungshebel, die nicht am Hydraulikzylinder angelenkt sind, an der Dachspitze bzw. dem heckseitig daran angrenzenden Dachrahmenteil angelenkt und wirken somit auf den Drehpunkt zwischen diesen Bauteilen.

Alternativ kann beispielsweise die Übertragung der Antriebskraft auf den vorderen Drehpunkt dadurch geschehen, dass ein elektrischer oder hydraulischer Antrieb über Zahnräder auf eine Hauptantriebsstange im vorderen Bereich des Verdecks einwirkt.

Besonders bevorzugt ist es, wenn die Dachspitze und das heckseitig daran angrenzende Dachrahmenteil in der geschlossenen Position des Dachs eine Totpunktlage einnehmen, so dass eine Kraft zum Bewegen des Dachs aus der Totpunktstellung heraus überwunden werden muss. Dies führt dazu, dass der Strakverlauf, d.h. der Außenkonturverlauf des Verdecks, durch die Totpunktkinematik stabilisiert wird, ohne eine bestimmte Vorspannung des Gestänges einstellen zu müssen. Außerdem ist es nicht nötig, einen zusätzlichen Antrieb zum Überwinden der entgegen wirkenden Kraft zum Bewegen der Dachrahmenteile aus der Totpunktlage heraus vorzusehen, da der Antrieb für die Dachbewegung auf den Gelenkpunkt zwischen der Dachspitze und dem daran angrenzenden Dachrahmenteil bzw. eine vordere Führungsstange einwirkt und somit die Funktion des Überwinden der Totpunktstellung übernehmen kann. Die gewöhnliche Einstellung und Stabilisierung des Strakverlaufs durch Abstimmung der Vorspannung im Gestänge kann darüber hinaus entfallen, da die Totpunktkinematik bereits den Strakverlauf ausreichend stabilisiert.

Nachfolgend wird die Erfindung beispielhaft anhand der beigefügten Figuren beschrieben, in denen:
- Fig. 1: eine perspektivische Ansicht eines Cabrioletfahrzeugs ist;
- Fig. 2: in Seitenansicht ein erfindungsgemäßes Dachgestänge zeigt;
- Fig. 3: das Öffnen des Dachs schematisch darstellt;
- Fig. 4: eine Darstellung der Totpunktlage am vorderen Drehpunkt zwischen vorderen und hinteren Dachteil ist;
- Fig. 5: weitere Varianten für das Einleiten der Antriebskraft in das Dachgestänge zeigt;
- Fig. 6: in perspektivischer Ansicht eine Alternative zeigt, bei der die Verstellkraft mittels einer Hauptantriebsstange im vorderen Bereich des Verdecks in das Gestänge eingeleitet wird;
- Fig. 7: die Antriebsstange und die Einleitung der Antriebskraft über Zahnräder in das Gestänge im Einzelnen zeigt;
- Fig. 8: die Anordnung des Antriebs bei der Ausführungsform gemäß Figuren 6 und 7 zeigt; und
- Fig. 9: eine weiter geöffnete Stellung des Dachs bei der Ausführungsform gemäß Figuren 7 bis 8 zeigt.

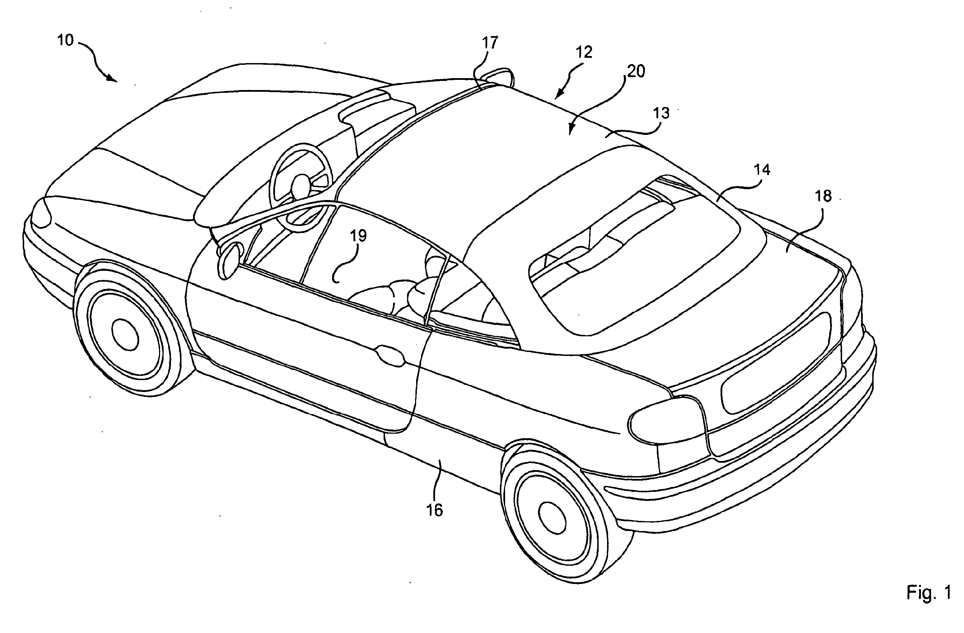

In Fig. 1 ist ein Cabrioletfahrzeug 10 dargestellt, das ein zu öffnendes Dach 12 besitzt. Das Dach eines Cabrioletfahrzeugs kann grundsätzlich als Hardtopdach, d.h. Dach mit starren Dachteilen, oder als Softtopdach gestaltet sein. Die Erfindung ist für beide Arten von Cabrioletdächern geeignet, solange die Dachteile zumindest starre Dachrahmen aufweisen. Bei den Ausführungsformen als Hardtopdach sind Dachteile 13, 14 relativ zueinander und relativ zur Fahrzeugkarosserie 16 zwangsgeführt bewegbar, so dass das Dach aus der in Fig. 1 gezeigten geschlossenen Position in eine offene Position und umgekehrt überführt werden kann. In der offenen Position des Dachs 12 kann das Dach im Heckbereich des Fahrzeugs abgelegt werden, so dass das Fahrzeug als Cabrioletfahrzeug genutzt werden kann.

Die das Dach 12 bildende Dachstruktur 20 liegt somit in demjenigen Bereich des Fahrzeugs, der von einem Windschutzscheibenrahmen 17 ausgehend bis zu einem Heckbereich 18 des Fahrzeugs den oberen Abschluss der Fahrgastzelle 19 bildet.

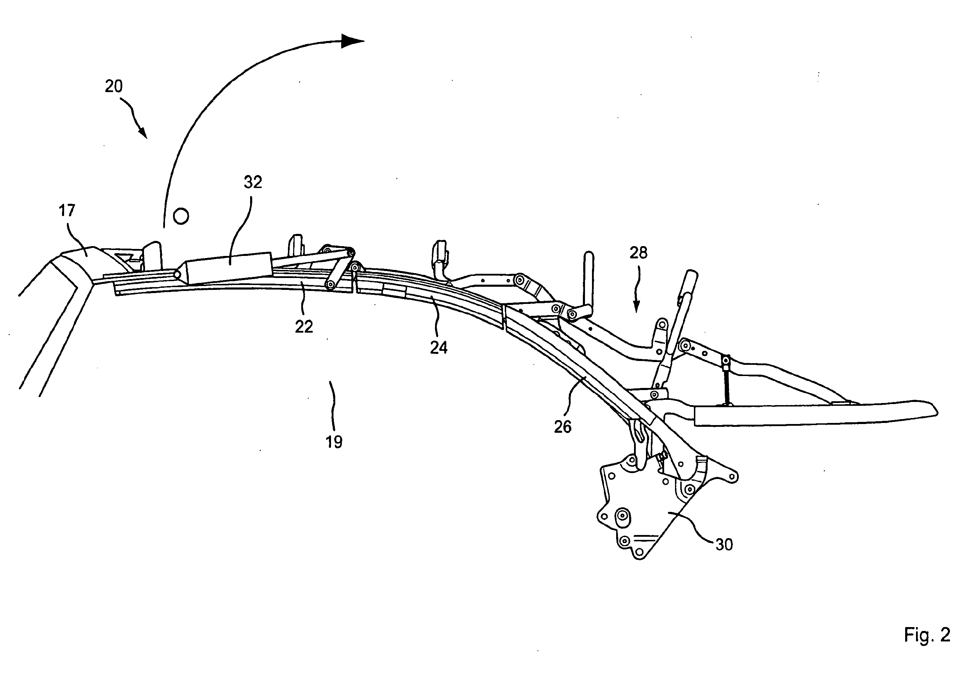

In Fig. 2 ist schematisch in Seitenansicht die Dachstruktur 20 gezeigt. Ausgehend vom Windschutzscheibenrahmen 17 ist die Dachstruktur 20 aus mehreren Dachteilen 22, 24, 26 gebildet, von denen das Dachteil 22 die Dachspitze, d.h. das am weitesten frontseitige Dachteil ist. Die Dachteile 22, 24, 26 sind über Gestänge 28 und Lenker miteinander derart verbunden, dass sie eine aufeinander abgestimmte Relativbewegung in koordinierter Form ausführen, wenn das Dach geöffnet oder geschlossen wird. Die Öffnungsbewegung ist in Fig. 2 mit dem Pfeil 0 angedeutet. Außerdem sind die Dachteile 22, 24, 26 im heckseitigen Bereich des Dachteils 26 über ein Hauptlager 30 mit der Fahrzeugkarosserie (in Fig. 2 nicht dargestellt) verbunden. Somit können die Dachteile 22, 24, 26 bei der zwangsgeführten Öffnungs- bzw. Schließbewegung der Dachstruktur 20 sich relativ zu dem bezüglich der Fahrzeugkarosserie festgelegten Hauptlager 30 bewegen und somit relativ zum Fahrzeug eine Öffnungs- bzw. Schließbewegung, z. B. in Form kombinierter translatorischer und rotatorischer Bewegungen, ausführen.

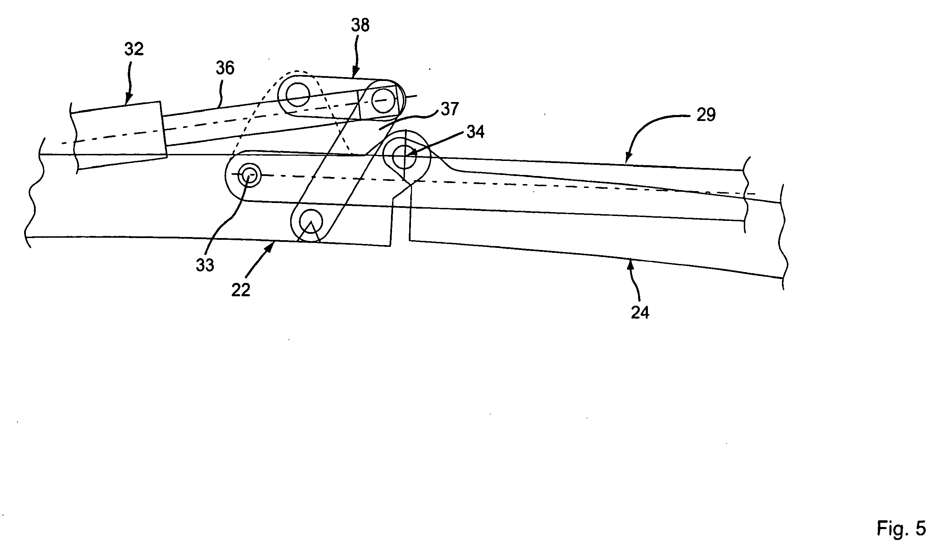

Ein Antrieb in Form eines Hydraulikzylinders 32 ist am vorderen Dachrahmen des vorderen Dachteils 22 angebracht. In der in Fig. 2 dargestellten Ausführungsform ist er jeweils in den linksseitigen Dachholmen der Dachteile 22, 24, 26 und den rechtsseitigen Dachholmen (nicht dargestellt) des Fahrzeugs symmetrisch vorgesehen, so dass die Antriebsbewegung an beiden Seiten des Fahrzeugs synchron in die Dachstruktur 20 eingeleitet wird. Wird der Hydraulikzylinder 32 betätigt, d.h. dessen Kolben 36 (Fig. 5) ein- oder ausgefahren, so wird eine Bewegung des vorderen Dachteils 22 relativ zum Dachteil 24 und/oder einer Führungsstange (in Fig. 2 nicht dargestellt) des Gestänges 28 ausgelöst, welche dazu führt, dass sich die Dachteile 22, 24, 26 entsprechend dem Zwangsführungsmechanismus des Gestänges 28 bewegen. Solche Zwangsführungsmechanismen sind bekannt und werden nicht weiter erläutert.

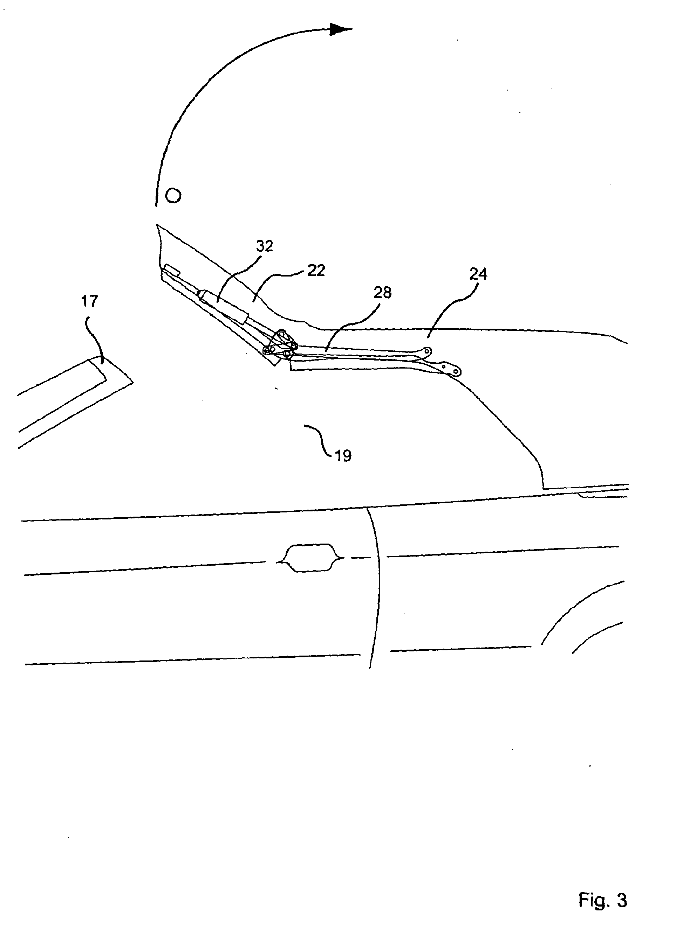

In Fig. 3 ist ein weiter fortgeschrittener Zustand der mit dem Pfeil O dargestellten Öffnungsbewegung angedeutet.

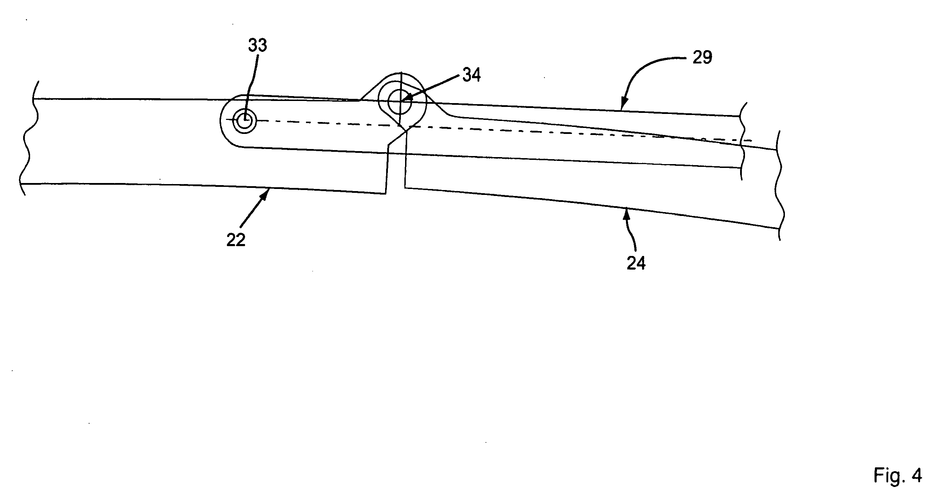

In Fig. 4 sind Möglichkeiten zum Einleiten der Antriebskraft im Bereich des vorderen Dachholms 22 dargestellt, wobei sich die Anordnung aus vorderem und hinterem Dachteil in der Totpunktlage befindet. Fig. 4 zeigt einen Ausschnitt, der des vordere Dachteil 22, das daran heckseitig angrenzende Dachteil 24 sowie eine Führungsstange 29 des Gestänges 28 zeigt. Die Führungsstange 29 ist am Dachholm des Dachteils 22 am Anlenkpunkt 33 angelenkt. Der Dachholm des vorderen Dachteils 22 und der daran heckseitig angrenzende Dachholm des Dachteils 24 sind am Gelenkpunkt 34 miteinander gelenkig verbunden. Dabei ist die Verbindung am Gelenkpunkt 34 vorzugsweise derart, dass eine Totpunktkinematik vorgesehen ist, d.h. dass in der geschlossenen Stellung des Dachs, die in Fig. 4 gezeigt ist, die Dachholme der Dachteile 22, 24 eine Stellung minimaler Energie einnehmen. D.h., dass der Drehpunkt 34 oberhalb der Wirkung der Führungsstannge 29 liegt (vgl. strich-punktierte Mittellinie). Um sie aus dieser Stellung herauszubewegen, beispielsweise zum Öffnen des Dachs, muss somit Energie aufgebracht werden. Diese Energie kann durch den Antrieb (nicht dargestellt in Fig. 4) für die Dachkinematik bereitgestellt werden, ohne einen zusätzlichen Antrieb zu verwenden. Somit kann der Außenkonturverlauf des Verdecks in der geschlossenen Position des Verdecks stabilisiert werden, ohne dass spezielle Vorspannungen des Verdecks optimiert werden müssen.

Die Antriebskraft des nicht dargestellten Antriebsmotors für die Dachkinematik 20 kann beispielsweise von einem E-Motor bzw. einem hydraulischen Drehantrieb bereitgestellt werden und an dem Gelenkpunkt 33, d.h. dem Drehpunkt zwischen der vorderen Führungsstange 29 und dem vorderen Dachrahmen 22, eingeleitet werden. Alternativ kann die Antriebskraft des E-Motors am Drehpunkt zwischen dem mittleren Dachteil 24 und dem vorderen Dachteil 22 eingeleitet werden.

In Fig. 5 ist eine Ausführungsform gezeigt, die den Hydraulikzylinder 32 als Antrieb für die Dachkinematik 20 verwendet. Das vordere Dachteil 2, und das mittlere Dachteil 24 sowie die Führungsstange 29 sind in gleicher Weise wie bei der Fig. 4 beschriebenen Ausführungsform miteinander verbunden.

Die Kolbenstange 36 des Hydraulikzylinders 32 ist mit zwei Lenkern 37, 38 verbunden, von denen der Lenker 37 mit der vorderen Führungsstange 29 ebenfalls gelenkig verbunden ist und der Lenker 37 mit dem vorderen Dachteil 22 im Rahmenbereich gelenkig verbunden ist. Bei einer Bewegung der Kolbenstange 36 aufgrund der Aktivierung des Hydraulikzylinders 32 erfahren die Lenker 37, 38 eine zwangsgeführte Bewegung und übertragen diese an die vordere Führungsstange 29 bzw. das Dachteil 22, so dass das Gestänge und die Dachteile beginnen, eine Relativbewegung zur Fahrzeugkarosserie und zu den weiteren Dachteilen 24, 26 auszuführen. Aufgrund dieser Bewegung wird durch die Zwangsführung auch in den weiteren Dachteilen 24, 26 eine Bewegung ausgelöst, so dass das Dach geöffnet bzw. geschlossen wird.

Statt der Anlenkung des Lenkers 38 an der vorderen Führungsstange 29 kann dieser auch mit dem mittleren Dachteil 24 gelenkig verbunden sein, so dass die Bewegung nicht in den Drehpunkt 33 zwischen der vorderen Führungsstange 29 und dem vorderen Dachteil 22 eingeleitet wird, sondern in den Drehpunkt 34 zwischen den Dachteilen 22 und 24.

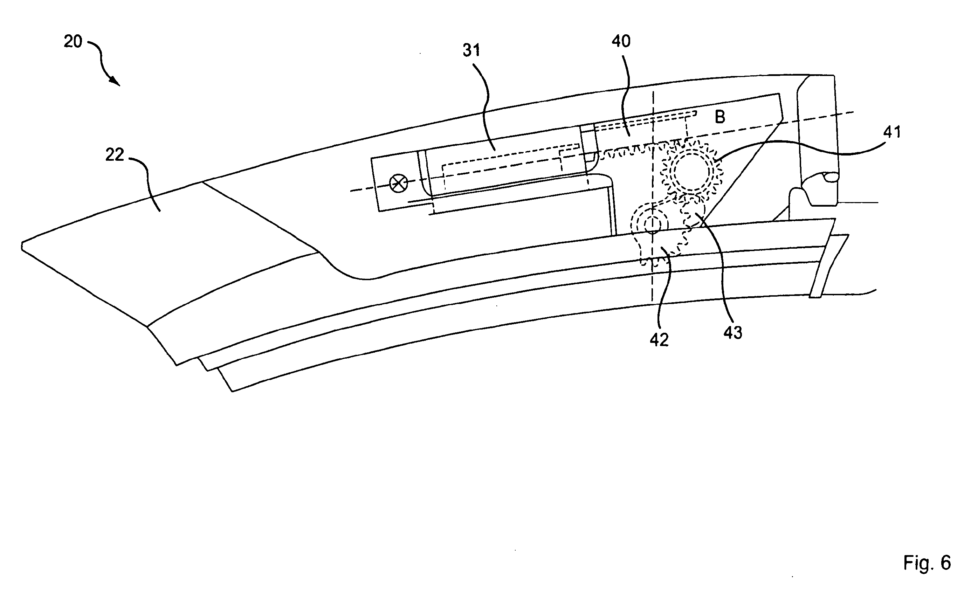

Figuren 6 bis 9 zeigen eine alternative Ausführungsform der Dachstruktur 20. Funktionsgleiche Bauteile wie in den in Verbindung mit Figuren 1 bis 5 beschriebenen Ausführungsformen sind durch die gleichen Bezugszeichen bezeichnet und werden nicht nochmals erklärt.

Die Antriebskraft zum Einleiten der Öffnungs- und Schließbewegung des Dachs 12 wird mittels eines Antriebs 31, beispielsweise eines Hydraulikzylinders 32 oder eines Elektromotors in das vordere Dachteil 22 eingeleitet, indem eine Zahnstange 40 aufgrund der Aktivierung des Antriebs 31 bewegt wird (Pfeil B in Fig. 6). Diese translatorische Bewegung der Zahnstange 40 wird über Zahnräder 41, 42 an eine Antriebsstange 43 übertragen. Durch die Drehung der Antriebsstange 43 wird, wiederum über Zahnräder 45, 46, ein Gestängemechanismus (in Fig. 6 nicht dargestellt) bewegt, welcher zu einer Relativbewegung der Dachteile 22, 24, 26 relativ zueinander und zur Fahrzeugkarosserie 16 führt.

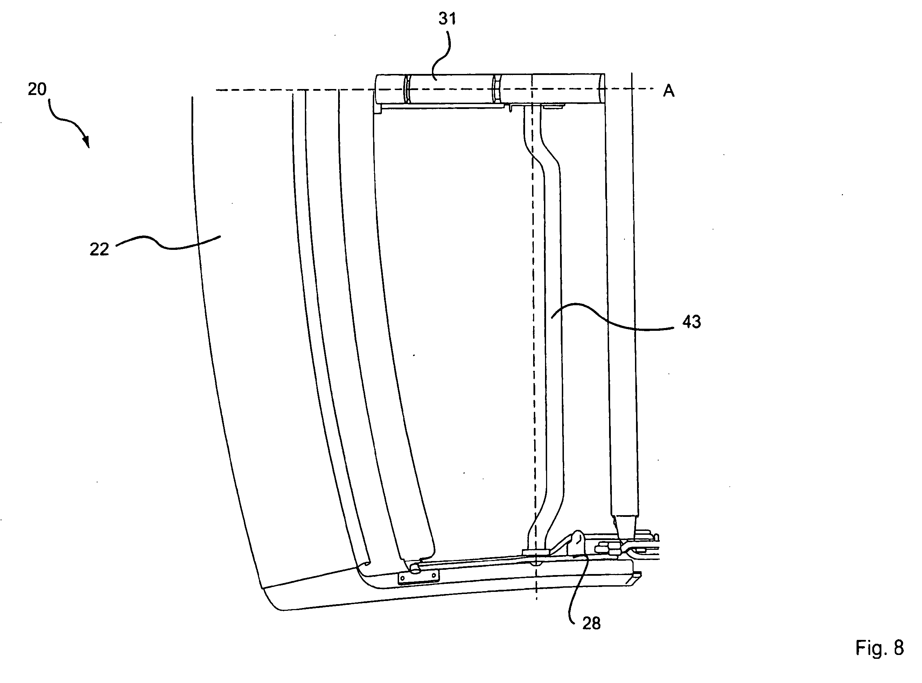

Wie aus der Draufsicht auf das Dach 12 in Fig. 8 zu erkennen ist, ist bei der in Fig. 6 bis 9 gezeigten Ausführungsform der Antrieb 31 mittig im Dach, insbesondere im vordersten Dachteil 22, integriert. Fig. 8 zeigt eine Hälfte der Dachstruktur 20. Die zweite nicht dargestellte Hälfte ist spiegelsymmetrisch zur Achse A gestaltet.

Alternativ dazu kann, ähnlich wie bei der in Figuren 1 bis 5 gezeigten Ausführungsform der Antrieb 31 auch seitlich an jedem der Dachholme des Dachteils 22 vorgesehen sein.

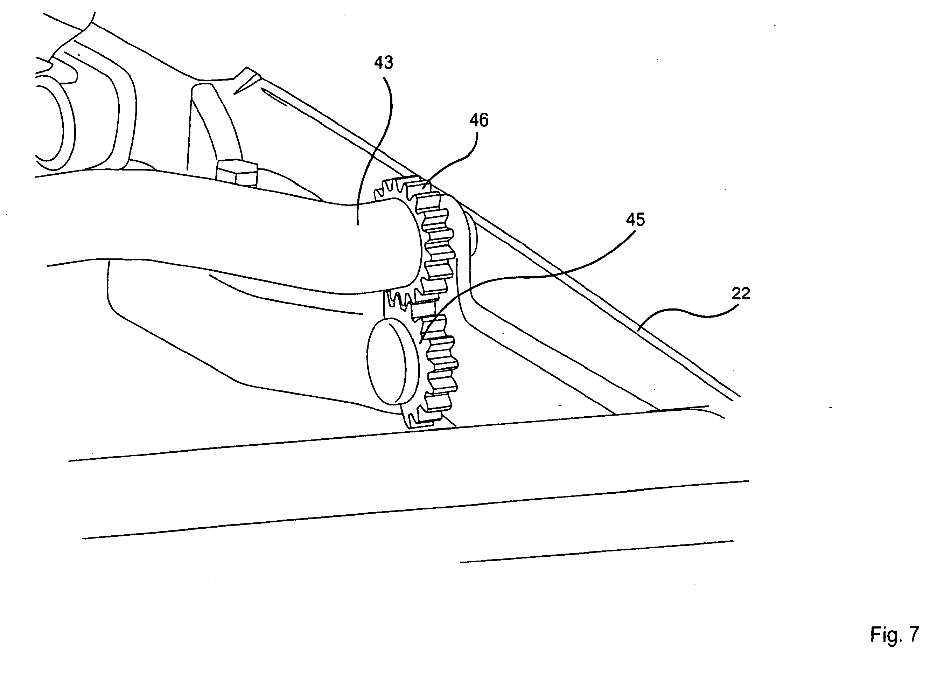

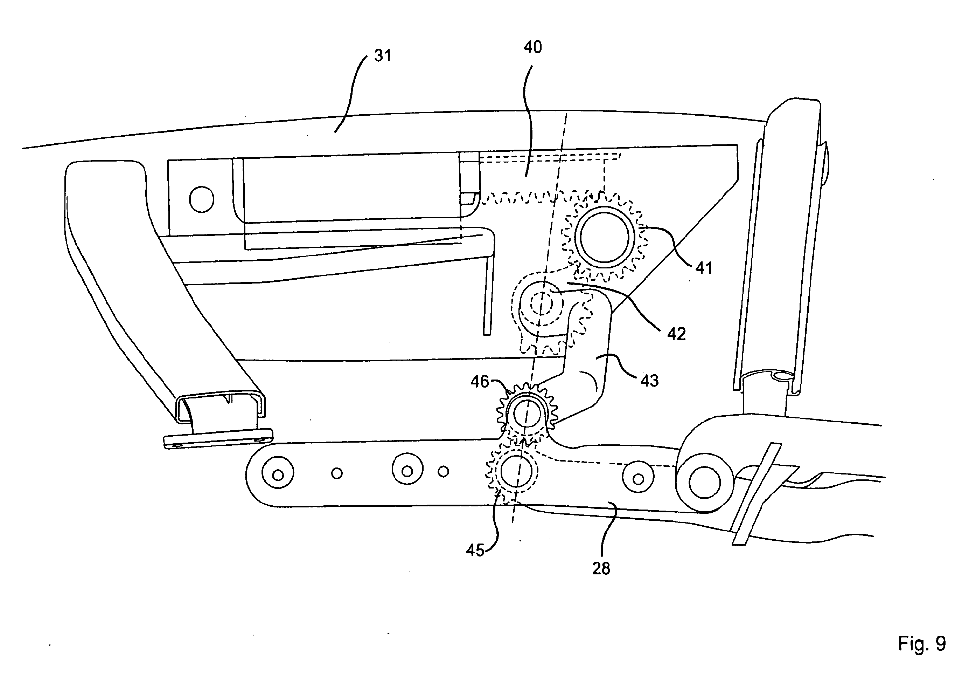

Fig. 7 zeigt in perspektivischer Ansicht ebenfalls bei geschlossenem Verdeck die in Verbindung mit Fig. 6 erläuterte Anordnung zur Krafteinleitung. Insbesondere sind die Antriebsstange 43 und die Zahnräder 42, 41 derart vorgesehen, dass sie möglichst wenig Bauraum im Bereich des vorderen Dachteils 22 beanspruchen. Da der Antrieb 32 fahrzeugmittig vorgesehen ist, ist die Kopffreiheit im Bereich des Fahrers und des Beifahrers nicht beeinträchtigt. Wie aus Fig. 7 zu erkennen ist, wird die durch die Antriebsstange 43 eingeleitete Antriebskraft über die Zahnräder 45, 46 in den Dachholm 22 eingeleitet und löst die Relativbewegung der Dachteile 22, 24, 26 zueinander und zur Fahrzeugkarosserie aus. In Fig. 9 ist eine Ansicht ähnlich zu Fig. 6, jedoch in weiter geöffneter Stellung des Dachs dargestellt.

In jeder der Ausführungsformen kann somit durch Übertragung der Antriebskraft auf einen ersten, im Bereich des vorderen Dachteils 22 liegenden Drehpunkt 33 bzw. 34 das gesamte Dach 12 relativ bewegt und abgelegt werden. Insbesondere wenn eine Totpunktkinematik zwischen dem ersten und dem zweiten Dachteil 22, 24 verwendet wird, kann der Strakverlauf stabilisiert werden, ohne dass eine Abstimmung der Vorlage bzw. Vorspannung im Gestell nötig ist. In jedem Fall kann die Hauptlagerkonstruktion des Hauptlagers 30 einfacher ausgeführt werden, da dort kein Antrieb vorgesehen werden muss, was zu einer Einsparung des Bauraums führt. Schließlich ist es möglich, den Gestängemechanismus 28 zu vereinfachen, da am vorderen Drehpunkt 33 bzw. 34 kein zusätzliches Lenkerparallelogramm erforderlich ist, sondern vielmehr die Kraft direkt eingeleitet werden kann.

### BEZUGSZEICHENLISTE

- 10: Cabrioletfahrzeug
- 12: Dach
- 13: Dachteil
- 14: Dachteil
- 16: Fahrzeugkarosserie
- 17: Frontscheibe
- 18: Heckbereich
- 19: Fahrgastzelle
- 20: Dachkinematik
- 22: Dachteil (Dachspitze)
- 24: Dachteil
- 26: Dachteil
- 28: Gestänge
- 29: Führungsstange
- 31: Antrieb
- 32: Hydraulikzylinder
- 33: Drehpunkt
- 34: Drehpunkt
- 36: Kolbenstange
- 37: Führungshebel
- 38: Führungshebel
- 40: Zahnstange
- 41: Zahnrad
- 42: Zahnrad
- 43: Antriebsstange
- 45: Zahnrad
- 46: Zahnrad

## Patentansprüche

1. Dachkinematik (20) für ein zu öffnendes Fahrzeugdach (12) mit mindestens zwei miteinander und in einem heckseitigen Bereich der Dachkinematik mit der Fahrzeugkarosserie zwangsverbundenen Dachteilen (22, 24, 26), wobei ein an eine Frontscheibe (17) eines Fahrzeugs (10) in geschlossener, montierter Position der Dachkinematik angrenzendes Dachteil (22) eine Dachspitze ist und ein Antrieb (31, 32) für die Dachkinematik (20) zum Überführen der Dachkinematik (20) zwischen einer geöffneten und einer geschlossenen Position an der Dachspitze vorgesehen ist.

2. Dachkinematik (20) nach Anspruch 1,
**dadurch gekennzeichnet,**
**dass** der Antrieb (31, 32) ein elektrischer oder hydraulischer Antrieb ist.

3. Dachkinematik (20) nach einem der vorhergehenden Ansprüche,
**dadurch gekennzeichnet, dass**
der Antrieb (31, 32) für die Dachkinematik an einem Drehpunkt (33) zwischen Dachspitze (22) und einer vorderen Führungsstange (29), die Bestandteil einer Zwangsverbindung zu dem mindestens einem weiteren Dachteil (24) ist, angreift.

4. Dachkinematik (20) nach Anspruch 3,
**dadurch gekennzeichnet,**
**dass** der Antrieb ein Hydraulikzylinder (32) ist, der mittels zweier Führungshebel (37, 38), die jeweils am Hydraulikzylinder angelenkt sind und an ihrem anderen Ende an der Dachspitze (22) bzw. der vorderen Führungsstange (29) angelenkt sind, auf den Drehpunkt (33) wirkt.

5. Dachkinematik (20) nach einem der Ansprüche 1 oder 2,
**dadurch gekennzeichnet,**
**dass** der Antrieb an einem Drehpunkt (34) zwischen der Dachspitze (22) und einem heckseitig daran angrenzenden Dachrahmenteil (24) angreift.

6. Dachkinematik (20) nach Anspruch 5,
**dadurch gekennzeichnet,**
**dass** der Antrieb ein Hydraulikzylinder (32) ist, der mittels zweier Führungshebel (37, 38), die jeweils am Hydraulikzylinder (32) angelenkt sind und an ihrem anderen Ende an der Dachspitze (22) bzw. dem heckseitig daran angrenzenden Dachrahmenteil (24) angelenkt sind, auf den Drehpunkt wirkt.

7. Dachkinematik (20) nach einem der vorhergehenden Ansprüche,
**dadurch gekennzeichnet,**
**dass** die Dachspitze (22) und das heckseitig daran angrenzende Dachrahmenteil (24) in der geschlossenen Position des Dachs eine Totpunktlage einnehmen.

## Claims

1. A roof moving assembly (20) for an openable vehicle roof (12) comprising at least two roof parts (22, 24, 26) connected to each other and, in a rear portion of the roof moving assembly, compulsorily connected to the vehicle body, wherein in a closed, mounted, position of the roof moving assembly a portion adjacent to a windshield (17) of a vehicle (10) is a roof top portion, and wherein a drive member (31, 32) for moving the roof moving assembly (20) between an opened and a closed position is provided on the roof top portion.

2. A roof moving assembly (20) according to claim 1,
**characterized in that**
the drive member (31, 32) is an electric or hydraulic drive.

3. A roof moving assembly (20) according to one of the preceding claims,
**characterized in that**
the drive member (31, 32) for the roof moving assembly acts on a pivot point (33) between the roof top portion (22) and a front guiding rod (29) that is fixably attached to at least one other roof part (24).

4. A roof moving assembly (20) according to claim 3,
**characterized in that**
the drive member is a hydraulic cylinder (32) that acts on the pivot point (33) via two guiding levers (37, 38), which are respectively hinged to the hydraulic cylinder and, on their other end, are hinged to the roof top portion (22) and the front guiding rod (29), respectively.

5. A roof moving assembly (20) according to one of the claims 1 or 2,
**characterized in that**
the drive acts on a pivot point (34) between the roof top portion (22) and a roof frame part (24), which is adjacent to the roof top portion at the rear side.

6. A roof moving assembly (20) according to claim 5,
**characterized in that**
the drive member is a hydraulic cylinder (32) that acts on the pivot point via two guiding levers (37, 38), which are respectively hinged to the hydraulic cylinders (32) and, at the other ends, are hinged to the roof top portion (22) and the roof frame part (24), respectively, which is adjacent to the top portion of the roof at the rear side.

7. A roof moving assembly (20) according to one of the preceding claims,
**characterized in that**
in the closed position of the roof, the roof top portion (22) and the roof frame part (24), which is adjacent to the top portion of the roof at the rear side, are in a dead centre position.

## Revendications

1. Cinématique de toit (20) pour toit de véhicule ouvrant (12) comprenant au moins deux parties de toit (22, 24, 26) raccordées à force l'une à l'autre et, dans une zone côté arrière de la cinématique de toit, à la carrosserie du véhicule, dans laquelle une partie de toit (22) jouxtant une vitre avant (17) d'un véhicule (10) en position montée fermée de la cinématique de toit, est un sommet de toit et un entraînement (31, 32) pour la cinématique de toit (20) est prévue pour transférer la cinématique de toit (20) entre une position ouverte et une position fermée au sommet du toit.

2. Cinématique de toit (20) selon la revendication 1, **caractérisée en ce que** l'entraînement (31, 32) est un entraînement électrique ou hydraulique.

3. Cinématique de toit (20) selon l'une quelconque des revendications précédentes, **caractérisée en ce que** l'entraînement (31, 32) pour la cinématique de toit agit sur un point de rotation (33) entre le sommet de toit (22) et une barre de guidage avant (29) qui fait partie d'un raccordement forcé à la au moins une autre partie de toit (24).

4. Cinématique de toit (20) selon la revendication 3, **caractérisée en ce que** l'entraînement est un cylindre hydraulique (32), qui agit sur le point de rotation (33) à l'aide de deux leviers de guidage (37, 38), qui sont respectivement articulés sur le cylindre hydraulique et qui sont articulés, à leur autre extrémité, sur le sommet de toit (22) ou la barre de guidage avant (29).

5. Cinématique de toit (20) selon l'une quelconque des revendications 1 ou 2, **caractérisée en ce que** l'entraînement agit sur un point de rotation (34) entre le sommet de toit (22) et une partie de châssis de toit (24) le jouxtant côté arrière.

6. Cinématique de toit (20) selon la revendication 5, **caractérisée en ce que** l'entraînement est un cylindre hydraulique (32), qui agit sur le point de rotation à l'aide de deux leviers de guidage (37, 38), qui sont respectivement articulés sur le cylindre hydraulique (32) et qui sont articulés, à leur autre extrémité, sur le sommet de toit (22) ou sur la partie de châssis (24) de toit le jouxtant côté arrière.

7. Cinématique de toit (20) selon l'une quelconque des revendications précédentes, **caractérisée en ce que** le sommet de toit (22) et la partie de châssis de toit (24) le jouxtant côté arrière adoptent une position de point mort dans la position fermée du toit.
